# EUROPÄISCHE PATENTANMELDUNG

(11) **EP 1 493 725 A1**
(43) Veröffentlichungstag der Anmeldung: **05.01.2005**
(21) Anmeldenummer: 04450139.3
(22) Anmeldetag: 05.07.2004
(51) Int. Cl.: C05F 17/02

(54) **Umsetzvorrichtung für Rottgut einer Kompostmiete**

(30) Priorität: 03.07.2003 AT 10182003
(71) Anmelder: Sandberger GmbH, 4084 St. Agatha (AT)
(72) Erfinder: Pehn, Walter, 4600 Wels (AT); Würzl, August, 4084 St. Agatha (AT); Fattinger, Johann, 4084 St. Agatha (AT)
(74) Vertreter: Hübscher, Helmut, Dipl.-Ing.

(57) **Zusammenfassung**

Es wird eine Umsetzvorrichtung (1) für Rottgut einer Kompostmiete mit einem Fahrgestell (2), mit einer dem Fahrgestell (2) vorgelagerten Fräseinrichtung (4), mit einem im Heckbereich des Fahrgestelles (2) vorgesehenen Querförderer (8) und mit einem Zubringförderer zwischen der Fräseinrichtung (4) und dem Querförderer (8) für das von der Kompostmiete abgefräste Rottgut beschrieben. Um eine Kompostmiete gleichermaßen in entgegengesetzten Arbeitsrichtungen vorteilhaft abarbeiten zu können, wird vorgeschlagen, daß dem Querförderer (8) ein Abwurfförderer (9) nachgeordnet ist, dessen Abwurfende zum Ausgleich des Längsversatzes zwischen Fräseinrichtung (4) und Querförderer (8) des seitlich im Bereich neben der Fräseinrichtung (4) abgesetzten Rottgutes in den Bereich seitlich der Fräseinrichtung (4) vorragt, wobei der Abwurfförderer (9) mit einem Träger (10) am Fahrgestell (2) gelagert und der Träger (10) samt Abwurfförderer (9) in Abhängigkeit der jeweiligen Fahrtrichtung (5) der Umsetzvorrichtung (1) zu beiden Enden (11, 12) des in seiner Förderrichtung umschaltbaren Querförderers (8) verlagerbar ist.

## Beschreibung

Die Erfindung bezieht sich auf eine Umsetzvorrichtung für Rottgut einer Kompostmiete mit einem Fahrgestell, mit einer dem Fahrgestell vorgelagerten Fräseinrichtung, mit einem im Heckbereich des Fahrgestelles vorgesehenen Querförderer und mit einem Zubringförderer zwischen der Fräseinrichtung und dem Querförderer für das von der Kompostmiete abgefräste Rottgut.

Bei der Kompostierung von Rottgut wird unter anderem zwischen Trapezmieten- und Dreiecksmietenkompostierung unterschieden. Der Vorteil der Trapezmietenkompostierung liegt in der guten Flächennutzung, daß heißt es kann viel Material auf verhältnismäßig kleiner Fläche kompostiert werden. Das in Trapezmieten kompostierte Material kann auch während laufender Kompostierungsprozesse ohne Eingriffe über längere Zeiträume gelagert werden, wodurch saisonale Schwankungen von zu kompostierenden Materialien ohne großen Aufwand ausgeglichen werden können. Die Dreiecksmietenkompostierung hat dagegen die Vorteile, daß die Hygienisierungs- und Kompostierprozesse steuerbar sind und nach kurzer Zeit ein besonders hoher Rottegrad erreichbar ist. Während des Rotteprozesses muß jedoch die Feuchtigkeit und Temperatur exakt überwacht und gesteuert werden, wozu ein oftmaliges Wenden des Materiales in der Intensivrotte unabdingbar ist.

Bei einer bekannten Umsetzvorrichtung für Rottgut von Trapez- und Dreiecksmieten (DE 198 32 787 A1), ist ein Maschinenrahmen auf einem selbstfahrenden Fahrwerk angeordnet, dem in Fahrtrichtung vorne und quer dazu eine waagrecht angeordnete, angetriebene Frästrommel vorgeordnet ist, mit der das Rottgut von der Kompostmiete abgefräst werden kann. Anschließend wird das von der Kompostmiete abgefräste Rottgut mit einem Schrägförderer an einen quer zur Fahrtrichtung im Heckbereich des Fahrgestelles angeordneten Querförderer übergeben, mit dem das Rottgut seitlich der Umsetzvorrichtung und um einen sich durch den Abstand zwischen Frästrommel und Querförderer ergebenden Längsversatz abgesetzt wird. Mit einer derartigen Vorrichtung ergibt sich aufgrund des Längsversatzes zwischen dem von der Frästrommel aufgenommenen und dem vom Querförderer abgeworfenen Rottgut allerdings der Nachteil, daß Kompostmieten immer nur in ein und derselben Arbeitsrichtung abgearbeitet werden können, da die umgesetzte Kompostmiete nach einem vollständigen Bearbeitungsvorgang ja wieder im wesentlichen in ihrer ursprünglichen Form und lediglich um den Längs- und Querversatz auf den Untergrund versetzt angeordnet sein soll. Deshalb muß die Umsetzvorrichtung, wenn ein Arbeitszyklus abgeschlossen ist, entweder um die Kompostmiete herumfahren oder retour durch die freigefräste Fahrgasse zum Ausgangspunkt zurückkehren, bevor mit dem Umsetzen der bzw. der nächsten Kompostmiete fortgefahren werden kann. Speziell beim Rückwärtsfahren ergeben sich mit allerdings Probleme durch Rottgut, das beim Umsetzen hinter der Maschine in die Fahrgasse gestürzt ist.

Eine weitere bekannte Umsetzvorrichtung für Rottgut einer Kompostmiete (EP 1 092 699 A2) umfaßt ebenfalls eine Fräseinrichtung, die das Rottgut entgegen der Arbeitsrichtung der Fräseinrichtung einer Querfördereinrichtung zuführt, mit der das Rottgut quer zur Arbeitsrichtung der Umsetzvorrichtung seitlich aus der Umsetzvorrichtung ausgetragen wird. Die Fräseinrichtung ist dabei samt einem Förderband der Querfördereinrichtung derart verschwenkbar an einer Trägereinrichtung angeordnet, daß die Fräserichtung und die Fördereinrichtung in einem spitzen Winkel zur Arbeitsrichtung der Umsetzvorrichtung angeordnet und anstellbar sind. Mit der Schrägstellung wird erreicht, daß das Rottgut bei einer auf die gewählte Schrägstellung der Fräseinrichtung und der Fördereinrichtung abgestimmten Vorschubbewegung der Umsetzvorrichtung lediglich mit einem seitlichen Versatz, also im wesentlichen ohne Längsversatz, im wesentlichen neben dem Bereich abgelegt wird, von dem es aufgenommen wurde. Von Nachteil ist dabei, daß die Kompostmieten ebenfalls wiederum nur in einer Arbeitsrichtung bearbeitet werden können, da die Anordnung der Austrageinrichtung einer Bearbeitung der Kompostmieten in entgegengesetzten Arbeitsrichtungen entgegensteht.

Der Erfindung liegt somit die Aufgabe zugrunde eine Umsetzvorrichtung für Rottgut der eingangs geschilderten Art anzugeben, mit der Kompostmieten in entgegengesetzten Arbeitsrichtungen bearbeitet werden können, ohne einen wesentlichen Längsversatz des umgesetzten Rottgutes in Kauf nehmen zu müssen, wobei insbesondere Trapez- und Dreiecksmieten gleichermaßen umgesetzt können werden sollen.

Die Erfindung löst diese Aufgabe dadurch, daß dem Querförderer ein Abwurfförderer nachgeordnet ist, dessen Abwurfende zum Ausgleich des Längsversatzes zwischen Fräseinrichtung und Querförderer des seitlich im Bereich neben der Fräseinrichtung abgesetzten Rottgutes in den Bereich seitlich der Fräseinrichtung vorragt, wobei der Abwurfförderer mit einem Träger am Fahrgestell gelagert und der Träger samt Abwurfförderer in Abhängigkeit der jeweiligen Fahrtrichtung der Umsetzvorrichtung zu beiden Enden des in seiner Förderrichtung umschaltbaren Querförderers verlagerbar ist.

Mit einer erfindungsgemäßen Umsetzvorrichtung ist es auf einfache Art und Weise möglich, Kompostmieten in entgegengesetzten Richtungen zu bearbeiten, wozu die Umsetzvorrichtung nach einem abgeschlossenen Arbeitszyklus am Ende der Kompostmiete lediglich wenden und nach einem seitlichen Versatz der Umsetzvorrichtung sowie einem Verlagern des Abwurfförderers zum jeweils anderen Ende des Querförderers und einem Umschalten der Förderrichtung des Querförderers auf einfache Weise mit dem Abarbeiten der Kompostmiete bzw. der benachbarten Kompostmiete in entgegengesetzter Richtung fortsetzen kann. Somit kann mit der Erfindung auf unnötige Leerfahrten verzichtet werden. Ebenso ergibt sich mit der Erfindung lediglich ein seitlicher Versatz der Kompostmieten, da das in den Bereich seitlich der Fräseinrichtung vorragende Abwurfende des Abwurfförderers dafür sorgt, daß das von der Fräseinrichtung aufgenommene Rottgut lediglich mit einem seitlichen Versatz am Untergrund abgesetzt wird, wozu das Abwurfende derart weit in den Bereich seitlich der Fräseinrichtung vorragt, daß das vom Abwurfförderer abgeworfene Rottgut an der gewünschten Stelle zu liegen kommt. Eine Feineinstellung der Absetzlage des Rottgutes kann durch eine entsprechende Wahl der Geschwindigkeit des Abwurfförderers bzw. durch eine entsprechende Wahl der Neigung des Abwurfförderers eingestellt werden. Der Abwurfförderer ist ebenso wie die anderen Förderer vorzugsweise ein Förderband, das seitlich schwenkbar und drehbar ausgeführt ist, so daß damit das Rottgut je nach Arbeitsrichtung auf beiden Seiten der Umsetzvorrichtung nach vorne transportiert und neben der Fräseinrichtung abgesetzt werden kann, wodurch eine Bearbeitung der Kompostmiete in entgegengesetzter Richtung möglich ist.

Ist mit der erfindungsgemäßen Umsetzvorrichtung insbesondere eine Trapezmiete zu bearbeiten, wird um den Gegendruck des Rottgutes auf die Fräseinrichtung so gering wie möglich zu halten und um ein Einstürzen der Mietenwand neben bzw. hinter der Umsetzvorrichtung vermeiden zu können vorgeschlagen, daß beidseits der Fräseinrichtung je eine die Arbeitsbreite der Fräseinrichtung begrenzende quer zur Fräseinrichtung angeordnete Fräskette angeordnet ist. Mit dieser Fräskette wird ein sauberer Schnitt durch die Mietenwand erzielt, wodurch diese kaum zum Einstürzen neigt und der Gegendruck des Rottgutes auf die Fräseinrichtung erheblich vermindert wird. Da die Fräsketten beidseits der Fräseinrichtung angeordnet sind, ist wiederum ein Bearbeiten der Kompostmiete in entgegengesetzten Richtungen möglich. Als besonders vorteilhaft hat es sich dabei erwiesen, wenn die Fräsketten um wenigstens 5° seitlich nach oben außen geneigt sind, wodurch die Mietenwand noch weniger zum Einstürzen neigt und wenn die Fräsketten gegebenenfalls in Fahrtrichtung nach oben vorne vorzugsweise in einen Winkel von rund 15° geneigt sind, wodurch ein besonders sauberer Schnitt des Rottgutes erzielt wird.

Um das zu bearbeitende Rottgut der Fräseinrichtung und der nachgeordneten Fördereinrichtung stets bestmöglich zuführen zu können bzw. um stets einen möglichst großen Befüllungsgrad der Fräseinrichtung und der Fördereinrichtung gewährleisten zu können, ist es vorteilhaft, wenn oberhalb der Fräseinrichtung eine quer zur Fahrtrichtung angeordnete waagrechte Dosiertrommel angeordnet ist. Diese Dosiertrommel ist vorzugsweise als Schneckenförderer ausgebildet, der Rottgut jeweils aus den Bereichen oberhalb und seitlich der Längsachse der Umsetzvorrichtung in Richtung der Fahrzeuglängsachse fördert und somit besser über die Breite der Fräseinrichtung verteilt. Eine besonders gute Zuführung des Rottgutes zur Fräseinrichtung und zur nachgeordneten Fördereinrichtung wird erzielt, wenn die Dosiertrommel in Fahrtrichtung vor der Fräseinrichtung und hinter der Fräskette angeordnet ist. Ebenso wird durch diese Maßnahme der Gegendruck des Rottgutes noch weiter verringert.

Um den Abwurfförderer besonders einfach und mit geringem Aufwand zu beiden Enden des Querförderer verlagern zu können, wird vorgeschlagen, daß der Träger als Schwenkarm mit vertikaler, vorzugsweise im Bereich der Fahrzeuglängsachse angeordneter, Schwenkachse ausgebildet ist, wobei die Fördereinrichtung am freien Ende des Trägers um eine ebenfalls vertikale Achse verschwenkbar am Träger gelagert ist. Damit kann der gewünschte seitliche Versatz der Kompostmiete einfach eingestellt werden. Der Träger könnte allerdings auch auf einem quer zur Fahrtrichtung der Umsetzvorrichtung in einem Rahmen der Umsetzvorrichtung geführten Schlitten zu den beiden Enden des Querförderers verlagerbar sein.

Um den Abstand der Fräseinrichtung zum Untergrund exakt justieren zu können bzw. um die Fräseinrichtung für Leerfahrten vom Untergrund abheben zu können, empfiehlt es sich, wenn die Fräseinrichtung an einem Maschinenrahmen mit wenigstens einem Schwenkträger der Höhe nach verschwenkbar und mit wenigstens einer erhebenden Richtung verstellbar gelagert ist.

In der Zeichnung ist die Erfindung anhand eines schematischen Ausführungsbeispieles dargestellt. Es zeigen:
- Fig. 1: eine erfindungsgemäße Umsetzvorrichtung für Rottgut in Seitenansicht,
- Fig. 2: die Umsetzvorrichtung aus Fig. 1 in Draufsicht in verkleinertem Maßstab und
- Fig. 3: die Umsetzvorrichtung in Vorderansicht.

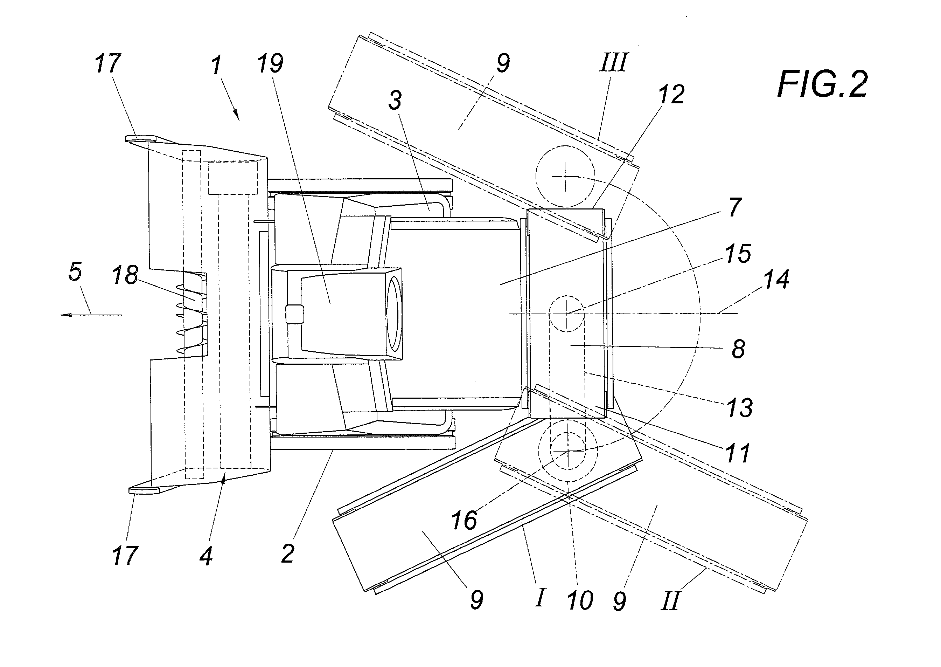

Eine Umsetzvorrichtung 1 für Rottgut R einer Kompostmiete M umfaßt unter anderem ein Fahrgestell 2 mit einem Raupenantrieb und einen Maschinenrahmen 3, wobei dem Fahrgestell 2 eine Fräseinrichtung 4 vorgelagert ist, die eine quer zur Fahrtrichtung 5 angeordnete, vorzugsweise hydraulisch angetriebene Frästrommel 6 umfaßt. Das von der Frästrommel 6 von einer Kompostmiete M abgearbeitete Rottgut R wird von der Frästrommel 6 dem als Schrägförderer 7 ausgebildeten Zubringförderer (einem Förderband) zugeführt, wonach das Rottgut R vom Schrägförderer 7 an einen Querförderer 8 weitergeleitet wird, der ebenfalls als Förderband ausgebildet ist. Dem Querförderer 8 ist ein Abwurfförderer 9 nachgeordnet, der zum Ausgleich des Längsversatzes zwischen Fräseinrichtung 4 und Querförderer 8 des im Bereich seitlich neben der Fräseinrichtung 4 abgesetzten Rottgutes R in den Bereich seitlich der Fräseinrichtung 4 derart vorragt, daß das vom Abwurfförderer 9 entlang einer Wurfparabel abgeworfene Rottgut R in etwa neben der Fräseinrichtung 4 zu liegen kommt. Um Kompostmieten M mit der erfindungsgemäßen Umsetzvorrichtung 1 in entgegengesetzten Arbeitsrichtungen gleichermaßen bearbeiten zu können, ist der Abwurfförderer 9 mit einem Träger 10 am Maschinenrahmen 3 bzw. am Fahrgestell 2 gelagert und der Träger 10 samt dem Abwurfförderer 9 in Abhängigkeit der jeweiligen Fahrtrichtung der Umsetzvorrichtung 1 zu beiden Enden 11, 12 des in seiner Förderrichtung umschaltbaren Querförderers 8 verlagerbar, wie dies insbesondere Fig. 2 zu entnehmen ist.

Zum Verlagern des Abwurfförderers 9 wird dabei gemäß dem Ausführungsbeispiel der Abwurfförderer 9 zunächst aus seiner schräg in Fahrtrichtung vorragenden Lage I in eine gegen die Fahrtrichtung nach hinten ragende Lage II verschwenkt, wonach der Abwurfförderer 9 samt dem Träger 10 in den Bereich des anderen Endes 12 des Querförderers 8 auf der anderen Seite der Umsetzvorrichtung verlagert wird (III). Zu diesem Zweck ist der Träger 10 als Schwenkarm 13 (oder als Drehteller) mit vertikaler im Bereich der Fahrzeuglängsachse 14 angeordneter Schwenkachse 15 ausgebildet, wobei der Abwurfförderer 9 am freien Ende des Trägers um eine ebenfalls vertikale Achse 16 verschwenkbar am Träger 10 gelagert ist.

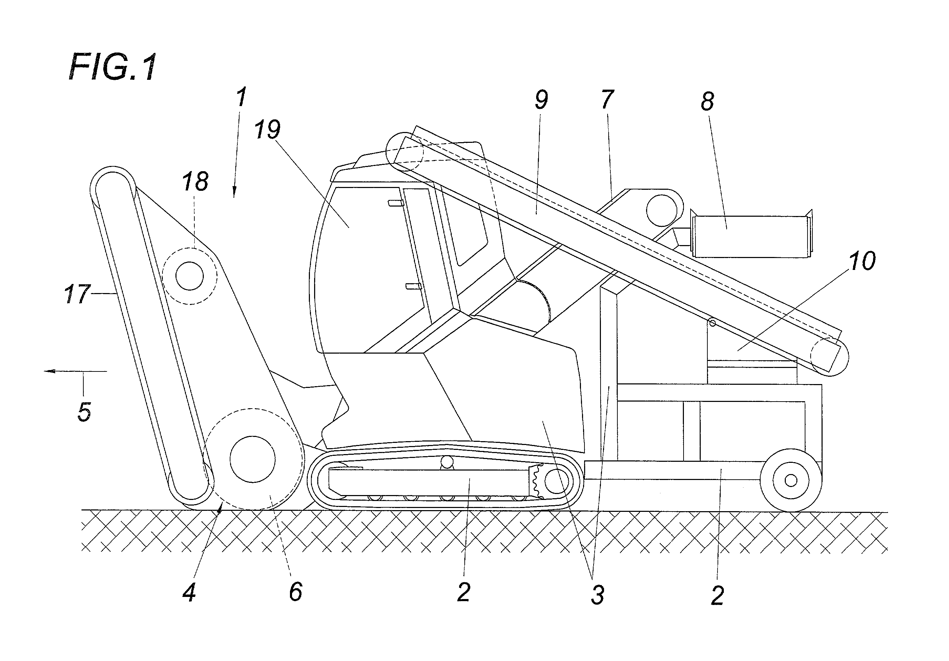

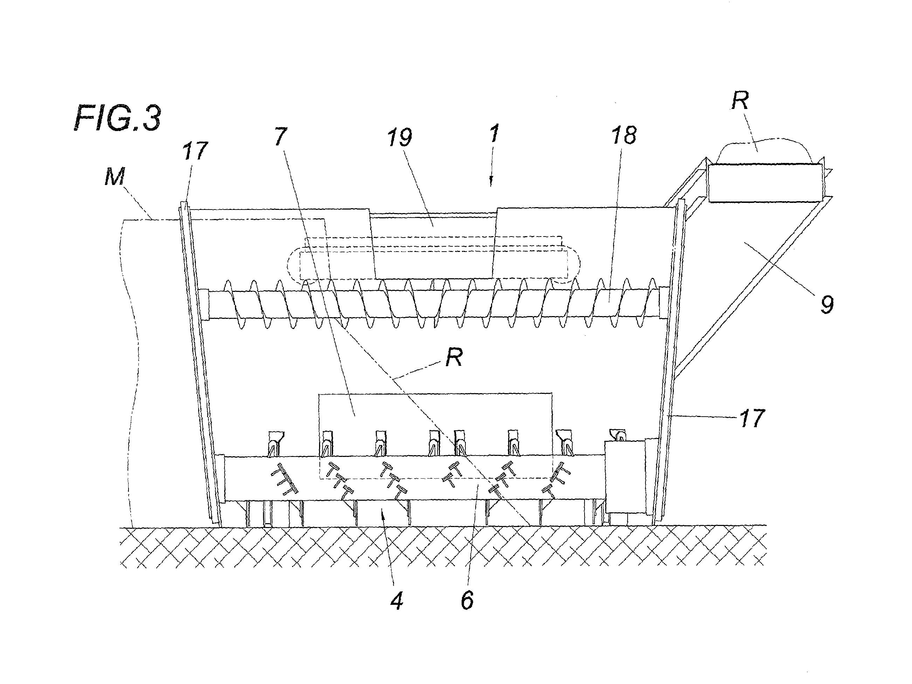

Um den Gegendruck der Kompostmiete M gegen die Umsetzvorrichtung 1 zu vermindern ist beidseits der Fräseinrichtung 4 je eine die Arbeitsbreite der Fräseinrichtung 4 begrenzende, quer zur Fräsrichtung 4 angeordnete Fräskette 17 angeordnet, die von vorne gesehen (Fig. 3) um 5° seitlich nach oben außen und von der Seite gesehen (Fig. 1) in Fahrtrichtung um 15° nach oben vorne geneigt sind.

Oberhalb der Fräseinrichtung 4 ist eine quer zur Fahrtrichtung 5 angeordnete, waagrechte Dosiertrommel 18 vorgesehen, die in Fahrtrichtung 5 vor der Fräseinrichtung 4 und hinter den Fräsketten 17 angeordnet ist. Die Dosiertrommel 18 ist als gegengesetzt arbeitende Förderschnecke ausgebildet, die sich oberhalb der Fräseinrichtung 4 befindliches Rottgut R aus den seitlichen Bereichen der Fräseinrichtung 4 nahe den Fräsketten 17 in den Bereich der Fahrzeuglängsachse 14 fördert, um so den Befüllungsgrad der Frästrommel 6 und der Fördereinrichtungen und damit die Umsetzleistung der erfindungsgemäßen Umsetzvorrichtung 1 zu verbessern.

Die Steuerung der gemäß dem angegebenen Ausführungsbeispiel als selbstfahrende Arbeitsmaschine ausgebildeten Umsetzvorrichtung 1 erfolgt von einer Fahrkabine 19 aus.

## Patentansprüche

1. Umsetzvorrichtung für Rottgut einer Kompostmiete mit einem Fahrgestell, mit einer dem Fahrgestell vorgelagerten Fräseinrichtung, mit einem im Heckbereich des Fahrgestelles vorgesehenen Querförderer und mit einem Zubringförderer zwischen der Fräseinrichtung und dem Querförderer für das von der Kompostmiete abgefräste Rottgut, **dadurch gekennzeichnet, daß** dem Querförderer (8) ein Abwurfförderer (9) nachgeordnet ist, dessen Abwurfende zum Ausgleich des Längsversatzes zwischen Fräseinrichtung (4) und Querförderer (8) des seitlich im Bereich neben der Fräseinrichtung (4) abgesetzten Rottgutes in den Bereich seitlich der Fräseinrichtung (4) vorragt, wobei der Abwurfförderer (9) mit einem Träger (10) am Fahrgestell (2) gelagert und der Träger (10) samt Abwurfförderer (9) in Abhängigkeit der jeweiligen Fahrtrichtung (5) der Umsetzvorrichtung (1) zu beiden Enden (11, 12) des in seiner Förderrichtung umschaltbaren Querförderers (8) verlagerbar ist.

2. Umsetzvorrichtung nach Anspruch 1, **dadurch gekennzeichnet, daß** beidseits der Fräseinrichtung (4) je eine die Arbeitsbreite der Fräseinrichtung (4) begrenzende, quer zur Fräsrichtung angeordnete Fräskette (17) angeordnet ist.

3. Umsetzvorrichtung nach Anspruch 2, **dadurch gekennzeichnet, daß** die Fräsketten (17) um wenigstens 5° seitlich nach oben außen geneigt sind.

4. Umsetzvorrichtung nach Anspruch 2 oder 3, **dadurch gekennzeichnet, daß** die Fräsketten (17) in Fahrtrichtung nach oben vorne geneigt sind.

5. Umsetzvorrichtung nach einem der Ansprüche 1 bis 4, **dadurch gekennzeichnet, daß** oberhalb der Fräseinrichtung (4) eine quer zur Fahrtrichtung (5) angeordnete waagrechte Dosiertrommel (18) vorgesehen ist.

6. Umsetzvorrichtung nach Anspruch 5, **dadurch gekennzeichnet, daß** die Dosiertrommel (18) in Fahrtrichtung (5) vor der Fräseinrichtung (4) angeordnet ist.

7. Umsetzvorrichtung nach einem Ansprüche 1 bis 6, **dadurch gekennzeichnet, daß** der Träger (10) als Schwenkarm mit vertikaler, vorzugsweise im Bereich der Fahrzeuglängsachse (14) angeordneter, Schwenkachse (15) ausgebildet ist, wobei der Abwurfförderer (9) am freien Ende des Trägers (10) um eine ebenfalls vertikale Achse (16) verschwenkbar am Träger (10) gelagert ist.

8. Umsetzvorrichtung nach einem Ansprüche 1 bis 8, **dadurch gekennzeichnet, daß** die Fräseinrichtung (4) am Fahrgestell (2), mit wenigstens einem Schwenkträger der Höhe nach verschwenkbar und mit wenigstens einer Hebeeinrichtung verstellbar gelagert ist.
